# EUROPÄISCHE PATENTSCHRIFT

(11) **EP 3 187 272 B1**
(45) Veröffentlichungstag und Bekanntmachung des Hinweises auf die Patenterteilung: **31.08.2022**
(21) Anmeldenummer: 15203073.0
(22) Anmeldetag: 30.12.2015
(51) Int. Cl.: B08B 3/00, B08B 3/14, B44D 3/00

(54) **STATION ZUR REINIGUNG VON MIT LACKEN UND FARBEN BEHAFTETEN WERKZEUGEN ODER SYSTEMTEILEN SOWIE REINIGUNGSVERFAHREN IN EINEM STATIONÄREN SYSTEM**
STATION FOR PURIFICATION OF TOOLS OR SYSTEM PARTS CONTAMINATED BY VARNISHES AND PAINTS AND CLEANING METHOD IN A STATIONARY SYSTEM
STATION DE NETTOYAGE D'OUTILS PRESENTANT DES PEINTURES OU DES COULEURS ET ELEMENTS DE SYSTEME ET PROCEDE DE NETTOYAGE DANS UN SYSTEME STATIONNAIRE

(43) Veröffentlichungstag der Anmeldung: 05.07.2017
(73) Patentinhaber: Bio-Circle Surface Technology GmbH, 33334 Gütersloh (DE)
(72) Erfinder: Schürer, Anne-Catrin, 33330 Gütersloh (DE); Große, Birgit, 33415 Verl (DE)
(74) Vertreter: Pellengahr, Maximilian Rudolf

(56) Entgegenhaltungen:
- US-A1- 2002 017 314
- US-A1- 2007 006 897
- US-A1- 2008 087 308

## Beschreibung

### Technisches Umfeld

Die Erfindung betrifft eine Station zur Reinigung von mit auf wasserbasierten und/oder lösemittelhaltigen Lacken und Farben behafteten Werkzeugen wie Rollen, Pinsel, Pistolen oder Systemteilen wie Filter, Walzen, Leitungen oder Schläuche.

### Stand der Technik

Aus dem Stand der Technik ist es bekannt, dass in Lackierbetrieben der Metallindustrie, der Möbel- und der Automobilbranche mit Spritzpistolen gearbeitet wird. Die Spritzpistole besteht hierbei aus einem Griffteil, an dem die Düse vorhanden ist, wobei auf dem Griffstück der Farbbehälter für den Lack oder die Farbe aufgesetzt wird. Die in dem Farbbehälter vorgehaltene Farbe oder Lack wird dann unter Zuführung von Druckluft aus der Düse zu einem Nebel auf die vorhandene Fläche aufgetragen. Andere Werkzeuge, mit denen Lack oder Farbe aufgetragen werden kann, sind hier beispielsweise Rollen oder Pinsel, wobei als Systemteile hier auch Filter, Walzen, Leitungen oder Schläuche zum Einsatz kommen, die ebenfalls von Farbe oder Lack behaftet sind.

Will man nun diese Werkzeuge oder Systemteile von dem Lack oder der Farbe befreien, um eine Wiederverwendung bereit zu stellen, bedarf es einer aufwendigen Reinigung, die hauptsächlich darin besteht, dass lösemittelhaltige Flüssigkeiten verwendet werden, die ein Ablösen der Farbe oder des Lackes von den Gegenständen bewirken.

Diese lösemittelhaltigen Substanzen, die hier zum Einsatz kommen, erfordern es, dass insbesondere der Arbeitsplatz, an dem die Reinigungsflüssigkeiten verwendet und vorgehalten werden, vor Funkenbildung geschützt werden muss, da die Reinigungsflüssigkeiten brennbar sind. Dies erfordert eine hohe Brandschutzsicherung, die sehr kostenaufwendig ist. Zudem müssen die mit den Lacken oder Farben behafteten, lösemittelhaltigen Flüssigkeiten nach der Reinigung gesondert entsorgt werden, so dass entsprechend diese vorgehalten werden müssen, um sie dann einem Entsorger zuzuführen, der dann mit einer aufwendigen Destillation die Flüssigkeiten wieder von den Farbpartikeln befreit. Zudem wird vom Gesetzgeber angestrebt, dass zur Begrenzung der Emissionen flüchtiger organischer Verbindungen diese durch Beschränkung des in Verkehrbringens eingegrenzt wird.

Eine Reinigungsvorrichtung, mittels der eine Reinigung von Werkzeugen von Farbresten bewerkstelligt werden kann, ist beispielsweise der US Patentanmeldung 2008/0087308 A1 zu entnehmen. Ein weiteres Beispiel ist der US 2007/0006897 A1 entnehmbar.

### Problem

Der Erfindung stellt sich somit das Problem, eine Station zur Reinigung von mit auf Wasser basierten und/oder lösemittelhaltigen Lacken und Farben behafteten Werkzeugen und Systemteilen derart weiter zu bilden, welche insbesondere die geschilderten Nachteile überwindet, wobei gewährleistet werden soll, dass sich aufwendige Brandschutzvorkehrungen für eine Reinigungsstation erübrigen.

### Lösung

Erfindungsgemäß wird das Problem mit den Merkmalen des Anspruchs 1 gelöst. Vorteilhafte Ausgestaltungen der Erfindung ergeben sich aus den Unteransprüchen. Zudem wird das Problem ebenfalls durch den unabhängigen Anspruch 10 gelöst, der hier ein Reinigungsverfahren unter Schutz stellt.

Die mit der Erfindung erreichten Vorteile bestehen nun darin, dass mit dem Reinigungssystem einer Station alle Auftrag- und Verarbeitungswerkzeuge und Zuführsysteme gereinigt werden können. Die manuell und maschinell einsetzbare Reinigungsflüssigkeit weist hierbei einen reduzierten VOC-Gehalt (volatile organic compoud) auf und verfügt über eine besondere Reinigungsleistung. Die Reinigungssysteme sind mit vielen Details ausgestattet, die den Arbeitsprozess erleichtern und zudem zu einem wirtschaftlichen Arbeiten beitragen. Die dreistufige Aufbereitung der Reinigungsflüssigkeit mit Grobfilter, Sedimentationsbecken und Feinfilter verlängert die Standzeit der Flüssigkeit.

Das Reinigungssystem ist flexibel einsetzbar. Gereinigt werden können alle bis mittelgroßen Teile wie z. B. Lackierpistolen, Düsen oder auch schlauchführende Systeme. Die Station kann ohne Strom arbeiten und verfügt über einen Durchlaufpinsel, eine Durchlaufpistole sowie einen Trichter zum Entleeren der Pistole. Die Dreistufenaufbereitung, bestehend aus Grobfilter, Sedimentierbecken und Feinfilter, verlängert die Standzeit des eingesetzten Mediums. Die standfeste Station aus Kunststoff oder aus Metall hat ein ergonomisches Design und eine hohe Stabilität, wobei die Station wartungsfreundlich gestaltet ist und mit einer Druckluftmembranpumpe und einem Druckluftanschluss ausgestaltet ist. Dadurch ergibt sich eine kompakte Bauweise und eine angenehme Arbeitshöhe.

Die verwendete, wässrige Flüssigkeit weist eine starke Reinigungsleistung auf, welche umweltgerecht, ungetrocknete Farben, Lacke und Druckfarben löst, wo bisher mit Waschverdünnung vorgereinigt oder mit frischen Lösemittel wie Aceton gereinigt wurde. Die Flüssigkeit weist keine unangenehmen Gerüche auf stellt keine Brandgefahr sowie Umweltgefährdung dar. Die VOCreduzierte Flüssigkeit stellt für die Mitarbeiter keine Gefahr mehr dar und steigert somit die Arbeitssicherheit. Zudem ist die Flüssigkeit kreislauffähig und somit wiederverwendbar. Die Station zur Reinigung kombiniert die manuelle und die automatische Reinigung von Lackauftrag und Verarbeitungswerkzeugen. Im integrierten Reinigungsbecken mit Durchlaufpinsel kann die Pistole manuell gereinigt werden. Die Durchflussmenge des Durchlaufpinsels wird mittels eines Kugelhahns im Reinigungsbecken geregelt. Eine Spritzdüse, die über einen Fußschalter bedient wird, ermöglicht ein Nachspülen mit klarem Medium. In einem zweiten Becken können Lackreste entsorgt und die Pistole über einen Trichter vollständig entleert werden. Hierfür verfügt die Station über einen eigenen Druckluftanschluss für die Pistole sowie eine Druckluftpistole zum Trocknen der gereinigten Teile.

Bei der Ausführungsform einer integrierten Automatikbox wird die Fließbecherpistole im auseinandergebauten Zustand automatisch gereinigt. Die Klarspülfunktion ermöglicht das Durchspülen der gereinigten Pistole mit sauberer Flüssigkeit. Mit der dreistufigen Aufbereitung wird das Reinigungsmedium gefiltert und wieder dem Kreislauf zugeführt. Die Farb- und Lackreste werden in einem separaten Behälter gesammelt. Dadurch ergeben sind eine zeitsparende und gründliche Reinigung.

Um die Wiederverwendung der nicht brennbaren, wässrigen VOC-reduzierten Flüssigkeit bereit zu stellen, wird die Reinigung der Pistole, der Schläuche, farbbehafteten Systemteilen mit dem VOC-reduzierten Gemisch, nicht brennbaren Reiniger in einem kompakten System am Arbeitsplatz vorgenommen.

Nach einer kurzen Reinigung des Gegenstandes erfolgt eine chemisch/physikalisch initiierte Ausflockung im System. Eine Grobfilterung hält die mit Farbe verunreinigte Flüssigkeit auf. In einem Sedimentationsbecken wird die Flüssigkeit derart beruhigt, dass die Partikel auf Grund ihrer Schwerkraft in der beruhigten Flüssigkeit aussedimentiert werden können. Über den Überlauf wird dann die Flüssigkeit in einen Auffangbehälter abgeleitet, in dem dann die Pumpe die vorgereinigte Flüssigkeit über einen Feinfilter führt, so dass dann die gereinigte Flüssigkeit für eine weitere Reinigung zur Verfügung steht. Der Austrag der Partikel und die Verunreinigungen werden über Filterwechsel und/oder Reinigung der Station ausgetragen.

Gemäß der Erfindung wird merkmalsgemäß vorgeschlagen, dass die Station einen Reinigungsbereich umfasst, in dem die Werkzeuge oder die Systemteile zur Reinigung vorhaltbar sind, und mittels einer im Kreislauf geführten Flüssigkeit die Werkzeuge oder Systemteile von Farbe oder Lack gereinigt werden und wobei unterhalb des Reinigungsbereiches der Station eine Aufbereitung der Flüssigkeit zur Wiederverwendung vorgesehen ist. Hierbei ist in vorteilhafter Weise vorgesehen, dass die im Kreislauf geförderte, wiederverwendbare Flüssigkeit nicht brennbar ist. Dies ergibt sich insbesondere durch den geringen Anteil von flüchtigen, organischen Verbindungen.

Gemäß der Erfindung bewirkt die Flüssigkeit, nachdem sie mit den zu reinigenden Gegenständen in Verbindung kommt, eine Ausflockung der Farbbestandteile bzw. der Lackbestandteile. Diese werden zur Aufbereitung der wiederverwendbaren Flüssigkeit über einen Grobfilter in Form eines Filtervlieses von im Auslaufbereich des Beckens ausgebildeten Reinigungsbereiches separiert. Unterhalb des Beckens ist ein mit einem Überlauf vorgesehenes Sedimentationsbecken mit Überlauf angeordnet. Die noch mit Feinpartikeln bestückte Flüssigkeit wird somit in den Sedimentationsbecken auf Grund des Ausfällens der einzelnen Partikel zusätzlich gereinigt. Die überströmende, gereinigte Flüssigkeit aus dem Sedimentationsbecken gelangt dann in ein Auffangbecken, welches darunter liegt und für die von Schwebstoffen gereinigte Flüssigkeit vorgesehen ist.

Nach einer vorteilhaften Ausgestaltung der Erfindung ist in dem Auffangbecken eine Pumpe vorgesehen, mittels der die gereinigte Flüssigkeit über einen Filter pumpbar ist, bevor die Flüssigkeit wieder in das als Reinigungsbereich ausgebildete Becken zur Reinigung der Gegenstände einströmt.

In Weiterbildung der Erfindung sind in dem Becken zur manuellen Reinigung ein Pinsel sowie eine Spritzdüse vorgesehen, wobei der Pinsel von Flüssigkeit durchströmt wird, wobei die beiden Reinigungsmittel hier mit einer Pumpe bedient werden können, so dass nach Bedarf entsprechend die Flüssigkeit zur Reinigung zugefügt werden kann.

Nach einer besonders vorteilhaften Ausgestaltung und Weiterbildung ist im Boden des Beckens eine Einstecköffnung oder ein Einsteckstutzen für eine Spritzpistole vorhanden, in der die in das Farbgefäß eingefüllte wässrige Flüssigkeit abgespritzt werden kann, um somit eine Reinigung der Pistole vorzunehmen.

In Weiterbildung ist in dem Becken zur automatischen Reinigung eine mit Düsen bestückte Kammer vorgesehen, in der die zu reinigenden Gegenstände vorgehalten werden können. Es besteht somit auch die Möglichkeit das zur automatischen Reinigung beispielsweise eine gesonderte Kammer im Reinigungsbecken vorgesehen ist, in der die einzelnen Teile dann beispielsweise an Magnethaltern festgelegt werden können, wobei dann entsprechend Düsen auf die Teile einwirken, die dann die Reinigung vornehmen.

Um dann die gereinigten Gegenstände noch zu trocknen, ist am Becken zusätzlich eine Druckluftpistole vorgesehen, mittels der man dann die feuchten Stellen abblasen kann.

Die Erfindung betrifft in gleicher Weise auch ein Reinigungsverfahren in einem stationären System, für mit auf Wasser basierten und/oder lösemittelhaltigen Lacken und Farben behaftete Werkzeugen wie Rollen, Pinsel, Pistolen oder Systemteilen, wie Filter, Walzenleitungen und Schläuche, verwendbar ist, wobei sich das Reinigungsverfahren dadurch auszeichnet, dass eine im Kreislauf geführte Flüssigkeit, die die Werkzeuge oder Systemteile von Farbe oder Lack reinigt, wobei die im Kreislauf wiederverwendbare Flüssigkeit nicht brennbar ist und die Flüssigkeit einen geringen Anteil von flüchtigen, organischen Verbindungen aufweist, wobei die Flüssigkeit eine Ausflockung der Farbbestandteile bzw. der Lackbestandteile im Kreislaufsystem bewirkt, und zur Aufbereitung der wiederverwendbaren Flüssigkeiten in einem ersten Schritt eine Grobfilterung über ein Filterfließ erfolgt und in einem zweiten Schritt eine Sedimentation der Schwebstoffe vorgenommen wird, bevor die gereinigte Flüssigkeit mittels einer Pumpe über einen Feinfilter in einem dritten Schritt wieder dem Becken zur Reinigung zugeführt wird.

### Beschreibung der Zeichnungen

Ein Ausführungsbeispiel der Erfindung ist in den Zeichnungen rein schematisch dargestellt und wird nachfolgend näher beschrieben. Es zeigt
- Figur 1: eine Frontansicht der erfindungsgemäßen Station zur Reinigung;
- Figur 2: eine perspektivische Darstellung der Station gemäß der Figur 1 mit aufgeklappten Deckel; und
- Figur 3: eine weitere perspektivische Darstellung der Station zur Reinigung gemäß der Figur 1 und der Figur 2 in einer anderen Ansicht.

### Ausführungsbeispiele

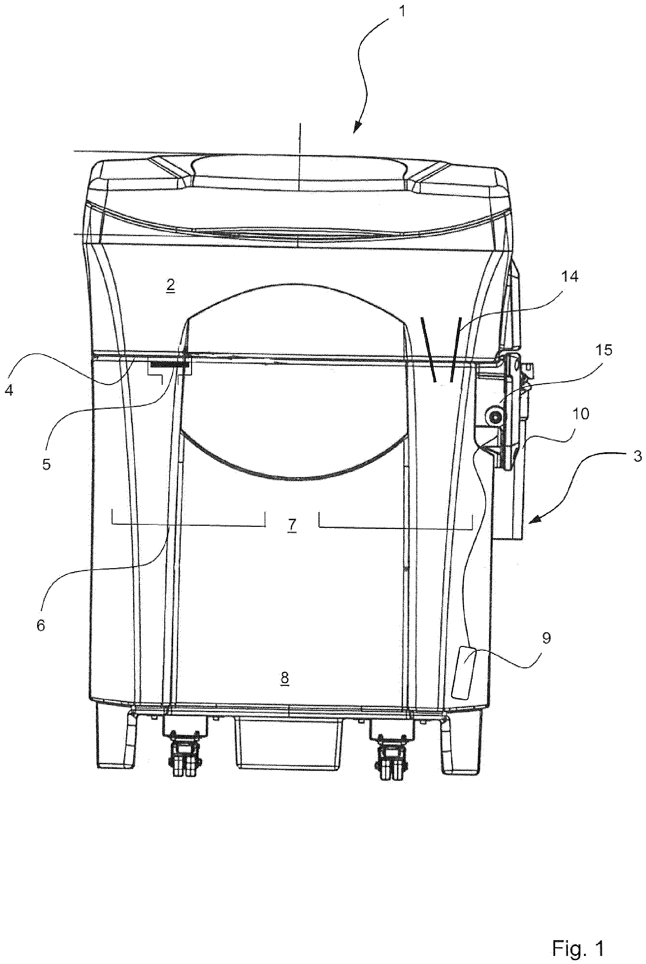

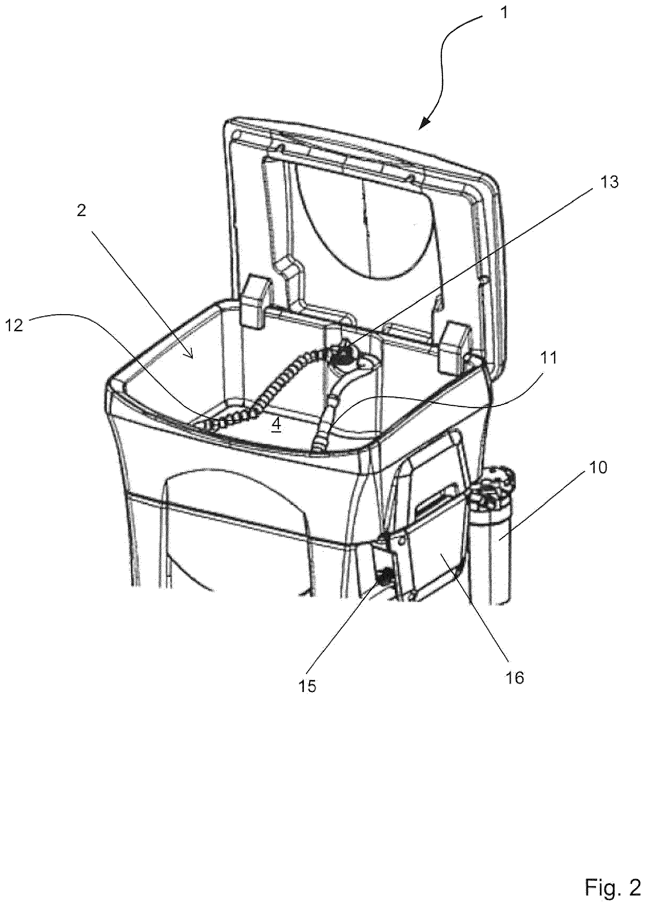

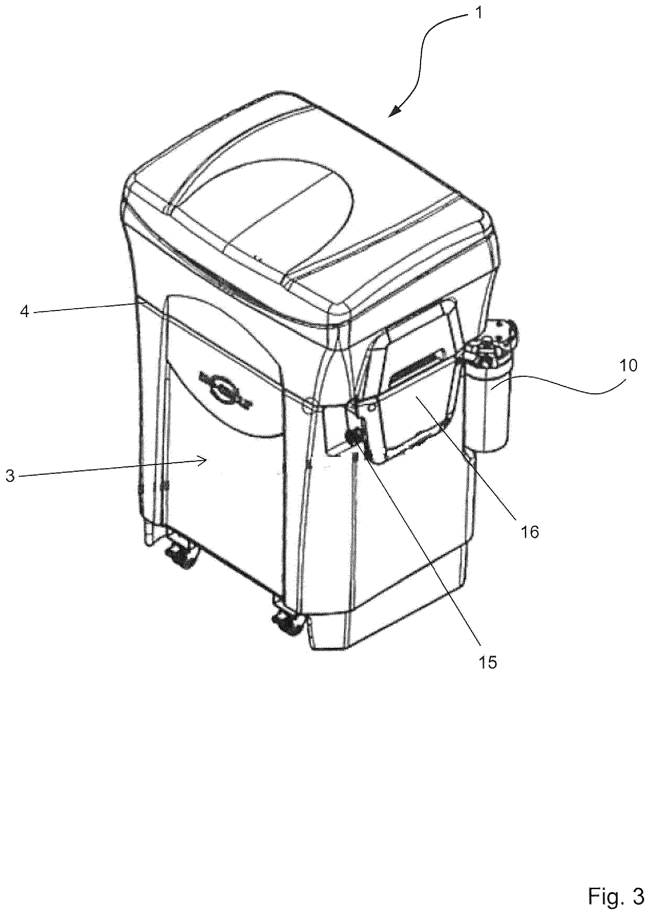

Die Figuren 1, 2 und 3 zeigen jeweils in unterschiedlichen Ansichten eine Station 1 zur Reinigung mit auf Wasser basierten und/oder lösemittelhaltigen Lacken und Farben behaften Werkzeugen, wie Pinsel, Rollen, Pistolen oder Systemteilen, wie Filter, Leitungen oder Schläuche, die mit Farbe oder Lacken behaftet sind. Wie insbesondere die Figur 2 zeigt, umfasst die Station 1 einen Reinigungsbereich 2, in dem die nicht näher dargestellten Werkzeuge oder Systemteile zur Reinigung vorgehalten werden. Die Station 1 verfügt hierbei über eine im Kreislauf geführte Flüssigkeit, die zur Reinigung der Werkzeuge oder Systemteile von Lack oder Farbe die Station 1 durchströmt. Dabei ist unterhalb des Reinigungsbereiches 2 der Station 1 eine Aufbereitung 3 der Flüssigkeit zur Wiederverwendung vorgesehen. Die im Kreislauf geförderte, wiederverwendbare Flüssigkeit ist hierbei nicht brennbar ausgestaltet, wobei die Lösung einen geringen Anteil von flüchtigen, organischen Verbindungen aufweist. Die verwendete Flüssigkeit bewirkt hierbei eine Ausflockung der Farbbestandteile bzw. der Lackbestandteile, sobald die Flüssigkeit mit den verschmutzten Gegenständen in Berührung kommt. Diese ausgeflockten Farbbestandteile werden zunächst am Beckenboden 4 in einem hierfür gesonderten Filter 5 (Grobfilterbereich) abgefangen. Dies erfolgt dadurch, dass zur Aufbereitung der wiederverwendbaren Flüssigkeit die Grobfilterung in Form eines Filtervlieses 5 im Auslaufbereich des als Becken ausgebildeten Reinigungsbereichs 2 erfolgt. Diese vorgereinigte Flüssigkeit strömt dann in ein unterhalb des Beckens 2 angeordnetes Sedimentationsbecken 6, in dem ein Überlauf 7 vorgesehen ist. In dem Sedimentationsbecken 6 wird die einströmende Flüssigkeit aus dem Reinigungsbecken 2 derart beruhigt, dass weitere Partikel aus der wässrigen Flüssigkeit am Boden des Sedimentationsbeckens 6 ausscheiden können, so dass die von Schwebstoffen gereinigte Flüssigkeit dann über den Überlauf 7 abfließen können. Die abfließende Flüssigkeit wird hierzu in dem darunterliegenden Auffangbecken 8 aufgefangen, in der eine Pumpe 9 vorgesehen ist, mittels der die gereinigte Flüssigkeit über einen Feinfilter 10 pumpbar ist. Der Feinfilter 10 befindet sich hierbei am Außengehäuse der Station 1, wie dies beispielsweise in der Figur 2 und 3 deutlicher zu erkennen ist.

Nach Verlassen des Feinfilters 9 strömt die wieder verwendbare Flüssigkeit in das als Reinigungsbereich ausgebildete Becken 2 wieder ein und steht somit zur Reinigung den behafteten Gegenständen wieder zur Verfügung.

In dem Becken 2 selbst kann zur manuellen Reinigung beispielsweise ein Pinsel 11 sowie eine Spritzdüse 12 vorgesehen sein, wie diese in der aufgeschwenkten Situation der Station 1 in der Figur 2 zu erkennen ist. Der Pinsel 11 kann hierbei ebenfalls von der wiederverwendbaren Flüssigkeit durchströmt werden. Um zwischen dem Pinsel 11 und der Spritzdüse 12 eine wechselnde Betätigung zu erreichen, ist zwischen dem Pinsel 11 und der Spritzdüse 12 ein Umstellventil 13 in Form eines Kugelhahns vorgesehen, so dass die Flüssigkeit entsprechend umgelenkt werden kann.

Nach einer vorteilhaften Ausgestaltung der Erfindung ist im Boden 13 des Beckens 2 eine Einstecköffnung oder ein Stutzen 14 für eine zu reinigende Spritzpistole vorhanden, wobei die Reinigung sich derart vollzieht, dass die Spritzpistolendüse in die Einstecköffnung oder den Stutzen 14 hineingehalten wird, wobei dann der Vorratsbehälter für Farbe entsprechend mit der Reinigungsflüssigkeit befüllt wird, und durch eine Druckluftanschluss entsprechend dann die Spritzpistole gereinigt wird.

Nach einer vorteilhaften Ausgestaltung der Erfindung kann die Station 1 auch mit einer automatischen Reinigung bestückt sein, wobei dann in dem Becken 2 eine mit Düsen bestückte, nicht näher dargestellte Kammer vorgesehen ist, in der die zu reinigenden Gegenstände angeordnet werden können. Zur Trocknung der gereinigten Gegenstände ist eine Luftpistole 15 vorgesehen, mit der dann die gereinigten Gegenstände von Feuchtigkeit befreit werden können. Diese wird dabei in einem Gehäuse 16 an der Station 1 vorgehalten.

### Bezugszeichenliste

01 Station
02 Reinigungsbereich / Becken
03 Aufbereitung
04 Beckenboden
05 Filtervlies
06 Sedimentationsbecken
07 Überlauf
08 Auffangbecken
09 Pumpe
10 Feinfilter
11 Pinsel
12 Spritzdüse
13 Umstellventil
14 Stutzen
15 Druckluftpistole
16 Gehäuse

## Patentansprüche

1. Station (1) zur Reinigung von mit auf wasserbasierten und/oder lösemittelhaltigen Lacken und Farben behafteten Werkzeugen wie Rollen, Pinsel, Pistolen oder Systemteilen wie Filter, Walzen, Leitungen oder Schläuche,
wobei die Station (1) einen Reinigungsbereich (2) in Form eines Beckens umfasst, in dem die Werkzeuge oder die Systemteile zur Reinigung vorhaltbar sind, und mittels einer im Kreislauf geführten, wiederverwendbaren Flüssigkeit die Werkzeuge oder Systemteile von Farbe oder Lack gereinigt werden,
wobei unterhalb des Reinigungsbereichs (2) der Station (1) eine Aufbereitung (3) der Flüssigkeit zur Wiederverwendung vorgesehen ist,
**dadurch gekennzeichnet,**
**dass** zur Aufbereitung der wiederverwendbaren Flüssigkeit eine Grobfiltrierung in Form eines Filtervlieses (5) von im Auslaufbereich des als Becken ausgebildeten Reinigungsbereichs (2) erfolgt und
**dass** unterhalb des Beckens ein mit einem Überlauf (7) ausgestattetes Sedimentationsbecken (6) angeordnet ist und
**dass** unterhalb des Sedimentationsbeckens (6) ein Auffangbecken (8) für die von Schwebstoffen gereinigte Flüssigkeit angeordnet ist.

2. Station nach Anspruch 1
**dadurch gekennzeichnet,**
**dass** die im Kreislauf geförderte, wiederverwendbare Flüssigkeit nicht brennbar ist.

3. Station nach Anspruch 1 und 2,
**dadurch gekennzeichnet,**
**dass** die Flüssigkeit einen geringen Anteil von flüchtigen, organischen Verbindungen aufweist und wässrig sein kann.

4. Station nach den Ansprüchen 1 bis 3,
**dadurch gekennzeichnet,**
**dass** die Flüssigkeit eine Ausflockung der Farbbestandteile bzw. der Lackbestandteile bewirkt.

5. Station nach den Ansprüchen 1 bis 4,
**dadurch gekennzeichnet,**
**dass** in dem Auffangbecken (8) eine Pumpe (9) vorgesehen ist, mittels der die gereinigte Flüssigkeit über einen Feinfilter (10) pumpbar ist, bevor die Flüssigkeit wieder in den Reinigungsbereich (2) einströmt.

6. Station nach den Ansprüchen 1 bis 5,
**dadurch gekennzeichnet,**
**dass** in dem Becken zur manuellen Reinigung ein Pinsel (11) sowie eine Spritzdüse (12) vorgesehen sind.

7. Station nach den Ansprüchen 1 bis 6,
**dadurch gekennzeichnet,**
**dass** im Boden (4) des Beckens eine Einstecköffnung oder ein Einsteckstutzen (14) für eine Spritzpistole vorhanden ist.

8. Station nach den Ansprüchen 1 bis 7,
**dadurch gekennzeichnet,**
**dass** in dem Becken zur automatischen Reinigung eine mit Düsen bestückte Kammer vorgesehen ist, in der die zu reinigenden Gegenstände anordbar sind.

9. Station nach den Ansprüchen 1 bis 8,
**dadurch gekennzeichnet,**
**dass** zur Trocknung der gereinigten Gegenstände am Becken eine Druckluftpistole (15) vorgesehen ist.

10. Reinigungsverfahren mittels einer Station (1) nach einem der Ansprüche 5 bis 9 für mit auf wasserbasierten und/oder lösemittelhaltigen Lacken und Farben behaftete Werkzeuge wie Rollen, Pinsel, Pistolen oder Systemteilen wie Filter, Walzen, Leitungen und Schläuche,
wobei eine wässrige, wiederverwendbare Flüssigkeit, die die Werkzeuge oder Systemteile von Farbe und Lack reinigt, im Kreislauf geführt wird,
wobei die Flüssigkeit nicht brennbar ist und einen geringen Anteil von flüchtigen, organischen Verbindungen aufweist und die Flüssigkeit eine Ausflockung von Farbbestandteilen bzw. von Lackbestandteilen im Kreislaufsystem bewirkt,
**dadurch gekennzeichnet,**
**dass** zur Aufbereitung der Flüssigkeit in einem ersten Schritt eine Grobfiltrierung über ein Filtervlies (5) erfolgt und in einem zweiten Schritt eine Sedimentation von Schwebstoffen in einem Sedimentationsbecken (6) vorgenommen wird,
wobei die Flüssigkeit über einen Überlauf (7) in ein Auffangbecken (8) abgeleitet wird, bevor in einem dritten Schritt die gereinigte Flüssigkeit mittels einer Pumpe (9) über einen Feinfilter (10) wieder dem Becken zur Reinigung zugeführt wird.

## Claims

1. A station (1) for cleaning tools such as rollers, brushes, spray guns or system components such as filters, rolls, pipes or hoses, marked with water-based and/or solvent-containing lacquers and paints,
wherein the station (1) comprises a cleaning region (2) in the form of a tank, in which the tools or the system components may be held for cleaning, and the tools or system components are cleaned of paint or lacquer by means of a reusable liquid conducted in the circuit,
wherein a treatment (3) of the liquid for reuse is provided below the cleaning region (2) of the station (1),
**characterized in that**
for the treatment of the reusable liquid, a coarse filtration in the form of a filter fleece (5) is carried out in the outflow region of the cleaning region (2) which is configured as a tank and
a sedimentation tank (6) which is provided with an overflow (7) is arranged below the tank and
a collection tank (8) for the liquid cleaned of suspended matter is arranged below the sedimentation tank (6).

2. The station according to Claim 1, **characterized in that** the reusable liquid conveyed in the circuit is non-flammable.

3. The station according to Claim 1 and 2, **characterized in that** the liquid has a small proportion of volatile organic compounds and may be aqueous.

4. The station according to Claims 1 to 3, **characterized in that** the liquid causes a precipitation of the paint components or the lacquer components.

5. The station according to Claims 1 to 4, **characterized in that** a pump (9) is provided in the collection tank (8), the cleaned liquid being able to be pumped thereby via a fine filter (10) before the liquid flows back into the cleaning region (2).

6. The station according to Claims 1 to 5, **characterized in that** a brush (11) and a spray nozzle (12) are provided in the tank for the manual cleaning.

7. The station according to Claims 1 to 6, **characterized in that** an insertion opening or a plug-in socket (14) for a spray gun is present in the bottom (4) of the tank.

8. The station according to Claims 1 to 7, **characterized in that** a chamber which is equipped with nozzles is provided in the tank for the automatic cleaning, the objects to be cleaned being able to be arranged in said chamber.

9. The station according to Claims 1 to 8, **characterized in that** a compressed air gun (15) is provided on the tank for drying the cleaned objects.

10. A cleaning method by means of a station (1) according to one of Claims 5 to 9, for tools such as rollers, brushes, spray guns or system components such as filters, rolls, pipes and hoses, marked with water-based and/or solvent-containing lacquers and paints,
wherein an aqueous reusable liquid, which cleans the tools or system components of paint and lacquer, is conducted in the circuit,
wherein the liquid is non-flammable and has a small proportion of volatile organic compounds and the liquid causes a precipitation of paint components or lacquer components in the circuit system,
**characterized in that**
for the treatment of the liquid, in a first step a coarse filtration is carried out via a filter fleece (5) and in a second step a sedimentation of suspended matter is carried out in a sedimentation tank (6),
wherein the liquid is discharged via an overflow (7) into a collection tank (8) before, in a third step, the cleaned liquid is fed by means of a pump (9) via a fine filter (10) back into the tank for cleaning.

## Revendications

1. Poste (1), destiné à nettoyer des outils souillés par des vernis et des peintures à base d'eau et/ou contenant des solvants, tels que des rouleaux, des pinceaux, des pistolets ou des éléments de systèmes, tels que des filtres, des cylindres, des conduites ou des flexibles,
le poste (1) comprenant une zone de nettoyage (2) sous la forme d'un bassin, dans lequel les outils ou les éléments de système peuvent être stockés pour le nettoyage, et les outils, ou les éléments de systèmes étant nettoyés au moyen d'un liquide recyclable, conduit dans un circuit,
en-dessous de la zone de nettoyage (2) du poste (1) étant prévu un traitement (3) du liquide pour son recyclage,
**caractérisé**
**en ce que** pour le traitement du liquide recyclable, une filtration grossière a lieu sous la forme d'un filtre non-tissé (5) dans la zone d'écoulement de la zone de nettoyage (2) conçue sous la forme d'un bassin, et
**en ce qu'**en-dessous du bassin est placé un bassin de sédimentation (6) équipé d'un trop-plein (7), et
**en ce qu'**en-dessous du bassin de sédimentation (6) est placé un bassin collecteur (8) du liquide débarrassé des matières en suspension.

2. Poste selon la revendication 1, **caractérisé en ce que** le liquide recyclable convoyé dans le circuit est ininflammable.

3. Poste selon la revendication 1 et 2, **caractérisé en ce que** le liquide comporte une faible part de composés organiques volatils et peut être aqueux.

4. Poste selon les revendications 1 à 3, **caractérisé en ce que** le liquide provoque une floculation des composants de la peinture ou des composants du vernis.

5. Poste selon les revendications 1 à 4, **caractérisé en ce que** dans le bassin collecteur (8) est prévue une pompe (9), au moyen de laquelle le liquide épuré est susceptible d'être pompé par l'intermédiaire d'un filtre fin (10), avant que le liquide n'afflue de nouveau dans la zone de nettoyage (2).

6. Poste selon les revendications 1 à 5, **caractérisé en ce que** dans le bassin sont prévus un pinceau (11) et une buse de pulvérisation (12) pour le nettoyage manuel.

7. Poste selon les revendications 1 à 6, **caractérisé en ce que** dans le fond inférieur (4) du bassin se trouve un orifice d'enfichage ou un embout d'enfichage (14) pour un pistolet à peinture.

8. Poste selon les revendications 1 à 7, **caractérisé en ce que** dans le bassin est prévue une chambre équipée de buses, pour le nettoyage automatique, dans laquelle les objets qui doivent être nettoyés peuvent être placés.

9. Poste selon les revendications 1 à 8, **caractérisé en ce qu'**un pistolet à air comprimé (15) est prévu sur le bassin, pour le séchage des objets nettoyés.

10. Procédé de nettoyage au moyen d'un poste (1) selon l'une quelconque des revendications 5 à 9 pour des outils souillés par des vernis et des peintures à base d'eau et/ou contenant des solvants, tels que des rouleaux, des pinceaux, des pistolets ou des éléments de systèmes, tels que des filtres, des cylindres, des conduites et des flexibles,
un liquide recyclable aqueux qui nettoie les outils et les éléments de systèmes étant conduit dans le circuit,
le liquide étant ininflammable et comportant une faible part de composés organiques volatils et le liquide provoquant une floculation des composants de la peinture ou des composants du vernis dans le système de circuit,
**caractérisé**
**en ce que** pour le traitement du liquide, dans une première étape, une filtration grossière a lieu par l'intermédiaire d'un filtre non-tissé (5) et dans une deuxième étape, il est procédé à une sédimentation de matières en suspension dans un bassin de sédimentation (6),
le liquide étant évacué par l'intermédiaire d'un trop-plein (7) dans un bassin collecteur (8), avant que dans une troisième étape, le liquide épuré soit de nouveau alimenté par l'intermédiaire d'un filtre fin (10) dans le bassin pour le nettoyage, au moyen d'une pompe (9).
